Europäisches Patentamt

European Patent Office

Office européen des brevets

(19)

(11) Veröffentlichungsnummer : **0 214 928**
**B1**

(12) **EUROPÄISCHE PATENTSCHRIFT**

(45) Veröffentlichungstag der Patentschrift :
**15.03.89**

(21) Anmeldenummer : **86810336.7**

(22) Anmeldetag : **24.07.86**

(51) Int. Cl.⁴ : **G 03 B 27/58**

(54) **Kassette für fotografisches Bandmaterial.**

(30) Priorität : **30.07.85 CH 3290/85**

(43) Veröffentlichungstag der Anmeldung :
**18.03.87 Patentblatt 87/12**

(45) Bekanntmachung des Hinweises auf die Patenterteilung : **15.03.89 Patentblatt 89/11**

(84) Benannte Vertragsstaaten :
**CH DE FR GB IT LI**

(56) Entgegenhaltungen :
**DE--A-- 2 048 684**
**DE--B-- 1 258 268**
**US--A-- 3 212 729**
**US--A-- 3 612 424**
**US--A-- 3 863 762**

(73) Patentinhaber : **GRETAG Aktiengesellschaft**
**Althardstrasse 70**
**CH-8105 Regensdorf (CH)**

(72) Erfinder : **Bizic, Milan**
**Mühlegasse 8**
**CH-8114 Dänikon (CH)**

(74) Vertreter : **Pirner, Wilhelm et al**
**Patentabteilung der CIBA-GEIGY AG Postfach**
**CH-4002 Basel (CH)**

**Beschreibung**

Die Erfindung betrifft eine Kassette gemäss dem Oberbegriff des Patentanspruchs 1, wie sie aus der US-A-3612 424 bekannt ist.

Derartige Kassetten sind in zahlreichen Ausführungen bekannt. Sie werden vor allem in Fotolabors in Verbindung mit mehr oder weniger stark automatisierten Kopiergeräten eingesetzt, an die sie eingangsseitig lichtdicht angekoppelt werden können, um sie mit unbelichtetem Fotopapier zu versorgen. Einzelne Kassetten sind auch dazu ausgebildet, sowohl eingangsseitig als auch ausgangsseitig an das Kopiergerät angeschlossen werden zu können, also auch belichtetes Kopiermaterial vom Kopiergerät aufzunehmen.

Durch die vorliegende Erfindung soll nun eine neue Kassette der im Oberbegriff des Patentanspruchs 1 definierten Art geschaffen werden, welche sich durch besondere konstruktive Einfachheit, grossen Bedienungskomfort und höchste funktionelle Zuverlässigkeit auszeichnet.

Die erfindungsgemässe Kassette, die diese Anforderungen erfüllt, ist im Patentanspruch 1 beschrieben. Besonders zweckmässige und vorteilhafte Ausgestaltungen ergeben sich aus den abhängigen Ansprüchen.

Im folgenden wird die Erfindung anhand eines in der Zeichnung dargestellten Ausführungsbeispiels näher erläutert. Es zeigen :

Fig. 1 eine nach der Linie I-I in Fig. 2 teilweise geschnittene Seiten- oder Stirnansicht einer erfindungsgemässen Kassette,

Fig. 2 einen Querschnitt nach der Linie II-II der Fig. 1 und

Fig. 3a bis 3c je einen Detailschnitt nach der Linie III-III der Fig. 2 in drei unterschiedlichen Klappstellungen eines Details.

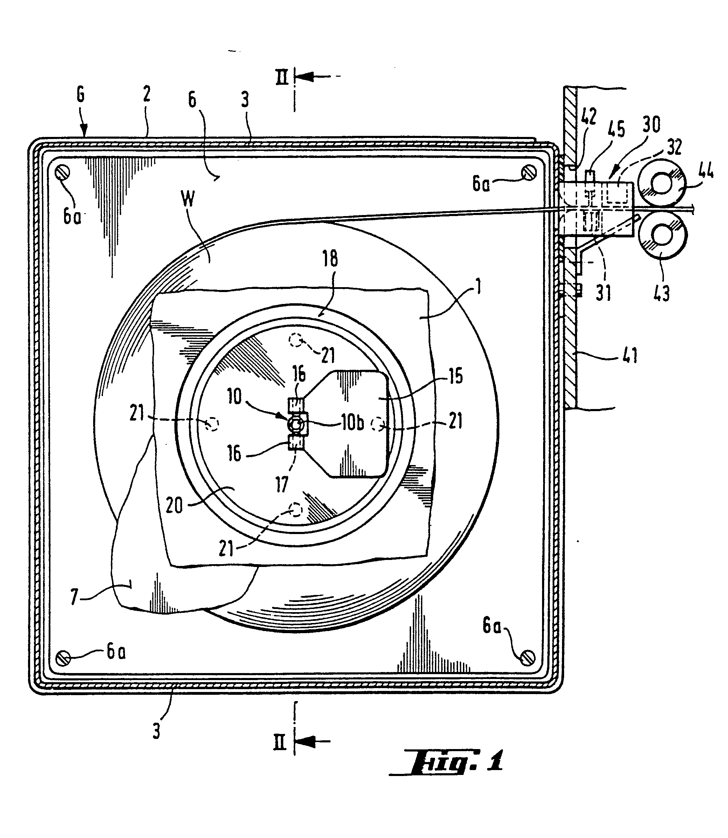

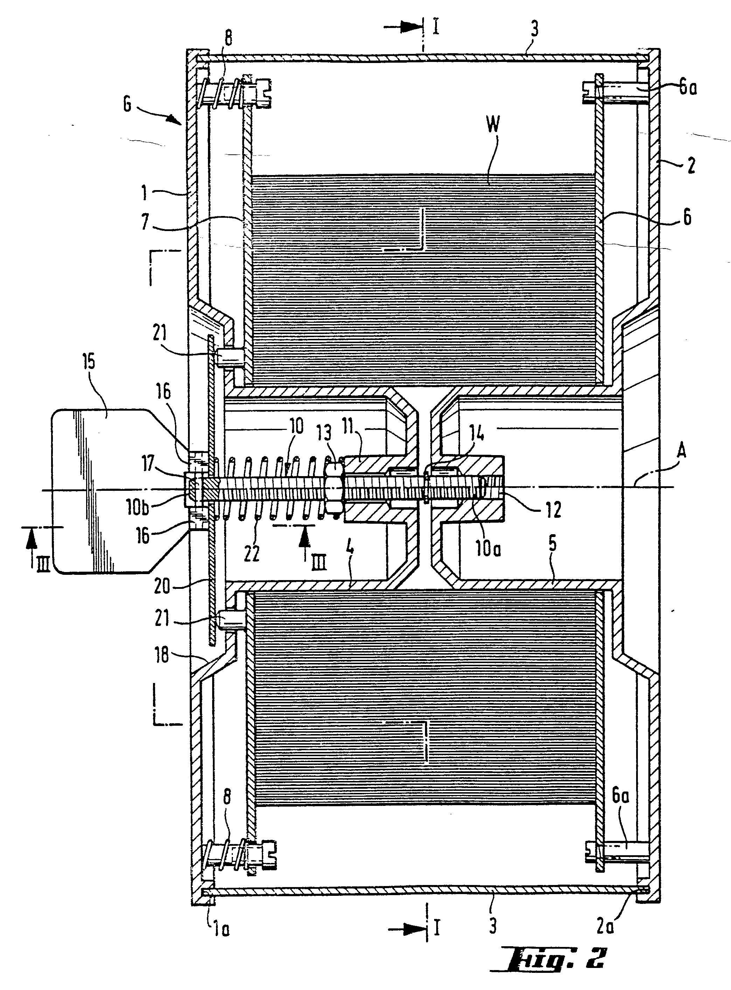

Wie die Figuren 1 und 2 deutlich erkennen lassen, ist das Gehäuse G der dargestellten Kassette äusserst einfach aufgebaut. Es besteht im wesentlichen aus nur drei Teilen, und zwar zwei praktisch gleich ausgebildeten Stirnplatten 1 und 2 und einem umlaufenden Mantel 3, der in Umfangsnuten 1a und 2a der Stirnplatten 1 und 2 gefasst ist.

Die beiden Stirnplatten 1 und 2 weisen je eine nach innen vorspringende Ausstülpung in Form eines hohlzylindrischen Zapfens 4 bzw. 5 auf. Diese beiden Zapfen verlaufen koaxial und bilden gemeinsam den Lagerdorn für den in der Kassette aufzunehmenden Wickel W fotografischen Bandmaterials.

An den Stirnplatten 1 und 2 ist innen parallel im Abstand je eine Führungsplatte 6 bzw. 7 zur stirnseitigen Führung des Wickels W angeordnet. Die Führungsplatte 6 ist über fixe Distanzbolzen 6a ortsfest in Bezug auf die Stirnplatte 2 angeordnet. Die Führungsplatte 7 dagegen ist in Richtung der Zapfen- bzw. Lagerdornachse A beweglich, wobei an der zugeordneten Stirnplatte 1 befestigte Federn 8 dafür sorgen, dass die Führungsplatte 7 stets mit einem vorgewählten Druck seitlich gegen den Wickel W presst und diesen dadurch exakt führt und im erforderlichen Mass bremst.

Zum Zusammenhalt des Kassettengehäuses G ist ein einziges Schliessorgan in Form eines Schraubbolzens 10 vorgesehen, welcher koaxial zu den zylindrischen Zapfen 4 und 5 verläuft. Er ist in einer am Zapfen 4 angeformten Lagerbüchse 11 drehbar gelagert und greift mit seinem Gewindeende 10a in eine am Zapfen 5 vorgesehene Gewindebohrung 12 ein. Eine Kontermutter 13 und ein Sicherungsring 14 begrenzen die axiale Beweglichkeit des Schraubbolzens in der Lagerbüchse 11.

Der Schraubbolzen 10 ragt auf der Seite der Stirnplatte 1 aus dem Gehäuse G heraus und trägt an seinem Ende 10 b ein plattenförmiges Drehorgan 15. Dieses Drehorgan bzw. dieser Handgriff ist mit einem Nockenorgan 16 versehen, dessen Funktion noch zu erläutern ist, und am äusseren Ende 10b des Schraubbolzens 10 um eine zu diesem senkrechte Klappachse 17 schwenk- bzw. klappbar befestigt. In der einen Extremstellung (Fig. 2) liegt der Handgriff 15 parallel zum Schraubbolzen 10 und kann so zum Verdrehen des letzteren betätigt werden (Arbeitsstellung). In der anderen Extremstellung (Fig. 1) liegt er um 90° geklappt, also parallel zur Stirnplatte 1, und ist dabei in einer muldenförmigen Einbuchtung 18 der Stirnplatte 1 versenkt und im wesentlichen bündig mit der diese Einbuchtung umgebenden Fläche der Stirnplatte. Diese Extremstellung ist die beim Einsatz der Kassette eingenommene Ruhestellung.

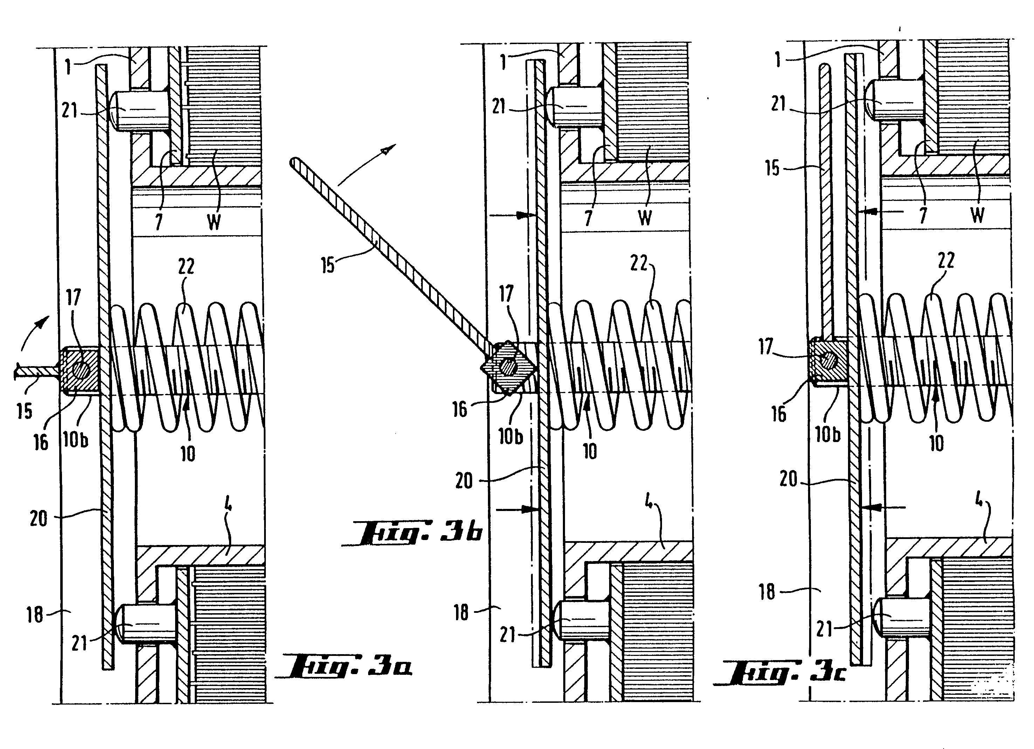

In der muldenförmigen Einbuchtung 18 ist eine Kuppelplatte 20 vorgesehen, die mittels durch Ausnehmungen in der Stirnplatte 1 hindurchgreifender Distanzbolzen 21 auf Druck mit der Führungsplatte 7 im Gehäuseinneren gekoppelt ist. Die Distanzbolzen sind nur an der Führungsplatte 7, nicht jedoch an der Kuppelplatte 20 befestigt. In geschlossenem Zustand der Kassette liegt die Kuppelplatte 20, wie in Fig. 2 dargestellt aufgrund der Wirkung einer den Schraubbolzen 10 umschliessenden Druckfeder 22 federnd an dem im Querschnitt in etwa quadratischen Nockenorgan 16 am Handgriff 15 an, wobei die Distanzbolzen 21 ausser Kontakt mit der Kuppelplatte 20 sind. Aus der Form des Nockenorgans 16 ist ersichtlich, dass sich die Kuppelplatte 20 in den beiden Extremstellungen des Handgriffs (Figs. 3a and 3c) am weitesten aussen und damit die Führungsplatte 7 am nächsten bei der zugeordneten Stirnplatte 1 befindet. Beim Hoch- bzw. Niederklappen des Handgriffs 15 wird jedoch die Kuppelplatte 20 und damit via Distanzbolzen 21 die Führungsplatte 7 entgegen der Wirkung der Druckfeder 22 vorübergehend einwärts bewegt (Fig. 3b). Durch diese Einwärtsbewegung wird am Wickel ein Richteffekt erzielt, d.h. allenfalls hervorstehende Lagen des Wickels werden wieder sauber ausgerichtet und bündig gemacht. Dabei ist es von Vorteil, dass die Ausrichtung des Wickels automatisch beim Verschliessen des Kassettengehäuses geschieht, ohne dass dazu irgendwelche besonderen Handgriffe benötigt wären.

Zum Einlegen eines Wickels W wird der Schraubbolzen 10 gelöst, bis er ausser Eingriff mit der Gewindebohrung 12 im Zapfen 5 ist, und dann die Stirnplatte 1 abgenommen. Nach dem Einlegen wird die Stirnplatte 1 wieder aufgesetzt und der Schraubbolzen 10 mittels des Handgriffs 15 angezogen, bis das Gehäuse satt verschlossen ist. Beim danach erfolgenden Umklappen des Handgriffs 15 in die Ruhestellung kommt es dann zu der schon erwähnten automatischen Ausrichtung des Wickels W.

Der Mantel 3 des Kassettengehäuses weist in seinem oberen Teil an einer Seite ein seitlich wegstehendes Anschlussmaul 30 auf, das zum Einführen in eine entsprechende Anschlussöffnung in einem automatischen Kopiergerät und damit zum lichtdichten Ankoppeln an dieses dient. Durch dieses Maul 30 wird das in der Kassette befindliche Bandmaterial dem Kopiergerät zugeführt. Das Maul 30 enthält einen lichtdichten Verschluss 31, der sich beim Ankoppeln an das Kopiergerät automatisch öffnet. Ferner enthält das Maul auch noch Kodiermittel in Form von z.B. vier kleinen Permanentmagneten 32, die von im Kopiergerät vorgesehenen Lesemitteln, vorzugsweise Hallsensoren mit zugeordneter Elektronik, ausgewertet werden können und eine Information über die Breite des gerade im Einsatz befindlichen Bandmaterials beinhalten. Die Verwendung von kleinen Permanentmagneten ist eine besonders einfache und zweckmässige Kodierungsart, die vor allem eine sehr einfache und bequeme Änderung der kodierten Information zulässt. Die Magneten sind dazu nur lose in entsprechenden Bohrungen angeordnet, und zur Änderung der Information wird einfach eine gewünschte Anzahl von Permanentmagneten in gewünschter Anordnung und gewünschter Polarisationsrichtung in diese Bohrungen eingelegt, wobei der die Information darstellende Code durch das Vorhandensein und die Polarisationsrichtung der Permanentmagneten gebildet ist. Bei beispielweise vier Permanentmagneten sind so 81 verschiedene Informationen codierbar.

In Fig. 1 ist die Ankopplung der Kassette an ein Kopiergerät angedeutet. Vom Kopiergerät ist allerdings nur eine Seitenwand 41 mit der Einführöffnung 42 für das Anschlussmaul 30 sowie ein Transportrollenpaar 43 und 44 für das Bandmaterial und eine Einlaufschräge 45 zur Betätigung des mit 31 angedeuteten lichtdichten Verschlusses im Kassettenmaul 30 dargestellt. Die Permanentmagneten sind durch die Position 32 symbolisiert.

Die vorstehend beschriebene, erfindungsgemässe Kassette ist insgesamt konstruktiv extrem einfach, äusserst zuverlässig im Betrieb und sehr einfach handzuhaben.

**Patentansprüche**

1. Kassette für einen Wickel fotografischen Bandmaterials mit einem lichtdichten Gehäuse, welches zwei einander gegenüberliegende Stirnplatten (1, 2) und einen diese lichtdicht verbindenden Mantel (3) umfasst, wobei jede Stirnplatte einen nach innen ragenden, im wesentlichen zylindrischen Zapfen (4, 5) aufweist, welche Zapfen koaxial zueinander angeordnet sind und zusammen einen Lagerdorn bilden, und wobei zum Oeffnen der Kassette wenigstens eine der Stirnplatten (1, 2) von den übrigen Teilen des Gehäuses (G) entfernbar ist, und die beiden Stirnplatten (1, 2) bei geschlossenem Gehäuse (G) mittels eines lediglich im Bereich ihrer Zapfen (4, 5) angreifenden Schliessorgans (10, 15) lösbar miteinander verbunden sind, dadurch gekennzeichnet, dass jede Stirnplatte (1, 2) mit einer zu den Achsen (A) der Zapfen (4, 5) senkrechten Führungsplatte (6, 7) zur stirnseitigen Führung des Wickels (W) versehen ist, wobei wenigstens eine (7) der Führungsplatten (6, 7) parallel zu den Achsen (A) der Zapfen (4, 5) beweglich gelagert ist und federnd gegen den Wickel (W) presst und diesen dadurch bremst.

2. Kassette nach Anspruch 1, dadurch gekennzeichnet, dass das Schliessorgan einen vorzugsweise zu den Zapfen (4, 5) koaxialen Schraubbolzen (10) umfasst, der in einem (4) der Zapfen (4, 5) drehbar gelagert ist und in eine Gewindebohrung (12) im anderen Zapfen (5) eingreift.

3. Kassette nach Anspruch 2, dadurch gekennzeichnet, dass Mittel (15, 16, 20) vorgesehen sind, um die bewegliche Führungsplatte (7) von ausserhalb der Kassette aus um eine gegebene Wegstrecke in Richtung von der zugeordneten Stirnplatte (1) weg und wieder auf diese zu zu bewegen.

4. Kassette nach Anspruch 3, dadurch gekennzeichnet, dass die Mittel einen Handgriff (15) umfassen, der bezüglich der zugeordneten Stirnplatte (1) ortsfest angeordnet und um eine zu den Achsen (A) der Zapfen (4, 5) senkrechte Klappachse (17) umklappbar gelagert ist, dass an der Aussenseite der zugeordneten Stirnplatte (1) eine zur beweglichen Führungsplatte (7) parallele und mit dieser auf Druck gekoppelte Kuppelplatte (20) vorgesehen ist, und dass der Handgriff (15) mit einem Nockenorgan (16) versehen ist, das mit der Kuppelplatte (20) in Eingriff steht und diese und damit die bewegliche Führungsplatte (7) abhängig von der jeweiligen Klappstellung des Handgriffs (15) mehr oder weniger weit in Richtung auf das Kasseteninnere hin bewegt.

5. Kassette nach Anspruch 4, dadurch gekennzeichnet, dass der Handgriff (15) am Schraubbolzen (10) klappbar gelagert und gleichzeitig als Drehorgan für den Schraubbolzen ausgebildet ist.

6. Kassette nach Anspruch 5, dadurch gekennzeichnet, dass der Handgriff (15) im wesentlichen plattenförmige Gestalt aufweist und das Nockenorgan (16) so ausgebildet ist, dass der Handgriff in zwei verschiedenen Klappstellungen stabil einrastet, wobei er in der einen Klappstellung im wesentlichen senkrecht und in der anderen Klappstellung im wesentlichen parallel zum Schraubbolzen (10) liegt, und die Führungsplatte (7) in diesen beiden Klappstellungen die geringste und zwischen diesen beiden Klappstellungen die grösste Entfernung von der zugeordneten Stirnplatte (1) aufweist.

7. Kassette nach Anspruch 6, dadurch gekennzeichnet, dass die zugeordnete Stirnplatte (1) eine zentrale muldenförmige Einbuchtung (18) aufweist, die die Kuppelplatte (20) aufnimmt und in der der Handgriff (15) versenkbar ist.

8. Kassette nach einem der Ansprüche 1-7, dadurch gekennzeichnet, dass die Zapfen (4, 5) mit ihren jeweiligen Stirnplatten (1, 2) einstückig bzw. an den Stirnplatten angeformt sind.

9. Kassette nach einem der Ansprüche 1-8, dadurch gekennzeichnet, dass ein vom Mantel (3) abstehendes Anschlussmaul (30) vorgesehen ist, das beim Ankoppeln der Kassette an ein Kopiergerät in eine an letzterem vorgesehene Anschlussöffnung einführbar ist und durch welches das in der Kassette enthaltene fotografische Bandmaterial der Kassette entnommen und dem Kopiergerät zugeführt werden kann, und dass in diesem Anschlussmaul (30) Kodiermittel (32) vorgesehen sind, welche in kodierter Form eine durch kopiergerätseitig vorgesehene Lesemittel erfassbare Information über die Breite des in der Kassette befindlichen Bandmaterials enthalten.

10. Kassette nach Anspruch 9, dadurch gekennzeichnet, dass die Kodiermittel aus einer Anzahl von Permanentmagneten (32) bestehen, wobei die Information durch die Anordung und Orientierung dieser Permanentmagneten gebildet ist.

11. Kassette nach Anspruch 9 oder 10, dadurch gekennzeichnet, dass das Anschlussmaul (30) einen lichtdichten Verschluss (31) aufweist, der beim Einführen in die Anschlussöffnung am Kopiergerät automatisch geöffnet wird.

**Claims**

1. Cassette for a roll of photographic strip material comprising a light-tight housing having two opposing frontal plates (1, 2) and a jacket (3) connecting them with each other in a light-tight manner, each of the frontal plates being equipped with an inwardly projecting, essentially cylindrical lug (4, 5) arranged coaxially with respect to each other and together forming a bearing arbor, and in which at least one of the frontal plates (1, 2) is removable from the remaining parts of the housing (G) to open the cassette, and when the housing (G) is closed, the two frontal plates (1, 2) are releasably connected to each other by means of a closure element (10, 15), engaging only in the region of its lugs (4, 5), characterised in that each frontal plate (1, 2) is provided with a guide plate (6, 7) which is perpendicular to the axes (A) of the lugs (4, 5) for the frontal guidance of the roll (W), in which at least one (7) of the guide plates (6, 7) is supported so as to be movable parallel to the axes (A) of the lugs (4, 5) and presses resiliently against the roll (W) and thereby brakes the latter.

2. Cassette according to Claim 1, characterised in that the closure element comprises a threaded bolt (10) which is preferably coaxial with respect to the lugs (4, 5), and which bolt is rotatably supported in one (4) of the lugs (4, 5) and engages into a threaded bore hole (12) in the other lug (5).

3. Cassette according to Claim 2, characterised in that means (15, 16, 20) are provided to move the displaceable guide plate (7) from outside the cassette by a given distance in the direction away from the associated frontal plate (1) and back toward said frontal plate.

4. Cassette according to Claim 3, characterised in that the means comprise a manual handle (15) located stationarily in relation to the associated frontal plate (1) and supported so as to be pivotable about a pivoting axle (17) perpendicular to the axes (A) of the lugs (4, 5), that the means further include a coupling plate (20) outside of the associated frontal plate (1) and parallel to the displaceable guide plate (7) and in pressuring contact with said guide plate, and that the manual handle (15) is provided with a cam element (16) which is in engagement with the coupling plate (20) and moves the latter and thereby the displaceable guide plate (7) as a function of the respective pivoting position of the manual handle (15) to a greater or lesser extent in the direction of the inside of the cassette.

5. Cassette according to Claim 4, characterised in that the manual handle (15) is pivotably supported on the threaded bolt (10) and is constructed simultaneously as the rotating element for the threaded bolt.

6. Cassette according to Claim 5, characterised in that the manual handle (15) has an essentially plate-like configuration and the cam element (16) is designed so that the manual handle may lock into two different pivoting positions in a stable manner, whereby in one pivoting position it is located essentially perpendicularly and in the other pivoting position essentially parallel to the threaded bolt (10) and the guide plate (7) in these two pivoting positions is at the least distance and between these two pivoting positions at the greatest distance from the associated frontal plate (1).

7. Cassette according to Claim 6, characterised in that the associated frontal plate (1) has a central trough-shaped recess (18) which receives the coupling plate (20) and in which the manual handle (15) may be recessed.

8. Cassette according to one of Claims 1-7, characterised in that the lugs (4, 5) are integral with their respective frontal plates (1, 2) or respectively are formed on the frontal plates.

9. Cassette according to one of Claims 1-8, characterised in that a connecting sleeve (30) is provided, projecting from the jacket (3), which sleeve is capable of being inserted in the course of the attachment of the cassette to a copying device into a connecting orifice provided on the latter and through which the photographic strip material contained in the cassette can be removed from the cassette and conducted to the copying device, and that in this connecting sleeve (30) coding means (32) are provided, which contain in a coded form information concerning the width of strip material contained within the cassette and which information is readable by reading means provided in the copying device.

10. Cassette according to Claim 9, characterised in that the coding means consist of a number of permanent magnets (32), whereby the information is formed by the arrangement and orientation of these permanent magnets.

11. Cassette according to Claim 9 or 10, characterised in that the connecting sleeve (30) comprises a light-tight closure (31) which is opened automatically upon insertion into the connecting orifice on the copying device.

## Revendications

1. Cassette pour enroulement de matière ou surface en bande pour photographie, comportant un corps étanche à la lumière, lequel comprend deux plaques frontales (1, 2), situées l'une en face de l'autre, et une enveloppe (3), étanche à la lumière, réunissant celles-ci, chaque plaque frontale présentant un tourillon (4, 5) sensiblement cylindrique dépassant vers l'intérieur, lesquels tourillons sont disposés coaxialement l'un à l'autre et forment ensemble une broche de palier, et au moins l'une des plaques frontales (1, 2) pouvant être séparée des autres pièces du corps (G) en vue d'ouvrir la cassette, et les deux plaques frontales (1, 2) étant reliées entre elles de façon détachable lorsque le corps (G) est fermé au moyen d'un organe (10, 15) de fermeture qui n'exerce son action que dans la zone de leurs tourillons (4, 5), cassette caractérisée en ce que chaque plaque frontale (1, 2) est munie d'une plaque (6, 7) de guidage, perpendiculaire aux axes (A) des tourillons (4, 5), pour le guidage frontal de l'enroulement (W), au moins une (7) des plaques (6, 7) de guidage étant montée de façon à être mobile parallèlement aux axes (A) des tourillons (4, 5) et pressant avec effet de ressort contre l'enroulement (W) et le freinant de ce fait.

2. Cassette selon la revendication 1, caractérisée en ce que la fermeture comprend un boulon (10), de préférence coaxial aux tourillons (4, 5), qui est monté tournant dans l'un (4) des tourillons (4, 5) et qui se met en prise dans un taraudage (12) situé dans l'autre tourillon (5).

3. Cassette selon la revendication 2, caractérisée en ce que des moyens (15, 16, 20) sont prévus pour déplacer, à partir de l'extérieur de la cassette, la plaque de guidage, mobile (7) sur une distance donnée, en l'éloignant de la plaque frontale (1) correspondante et pour la ramener contre celle-ci.

4. Cassette selon la revendication 3, caractérisée en ce que les moyens comprennent une poignée (15), qui est disposée de façon fixe par rapport à la plaque frontale (1) correspondante et qui est montée de façon rabattable sur un axe (17) de rabattement, perpendiculaire aux axes (A) des tourillons (4, 5) ; en ce que, du côté extérieur de la plaque frontale (1) correspondante, est prévue une plaque (20) de liaison, en forme de disque parallèle à la plaque (7) mobile de guidage et accouplée à cette dernière par pression, et en ce que la poignée (15) est munie d'un organe formant came (16), qui est en contact avec la plaque (20) et qui déplace de ce fait la plaque (7) de guidage, en fonction de la position de rabattement de la poignée (15), plus ou moins loin vers l'intérieur de la cassette.

5. Cassette selon la revendication 4, caractérisée en ce que la poignée (15) est montée de façon rabattable sur le boulon (10) et est conformée en même temps en organe de mise en rotation du boulon.

6. Cassette selon la revendication 5, caractérisée en ce que la poignée (15) a sensiblement une forme de plaque et en ce que l'organe formant came (16) est conformé de façon telle que la poignée s'enclenche de manière stable dans deux positions de rabattement différentes, en se trouvant dans une des positions de rabattement sensiblement perpendiculaire au boulon (10) et dans l'autre position de rabattement sensiblement parallèle à celui-ci, et la plaque (7) de guidage présentant, dans ces deux positions de rabattement, l'éloignement le plus faible par rapport à la plaque frontale (1) correspondante et, entre ces deux positions de rabattement, l'éloignement le plus grand par rapport à la plaque frontale (1) correspondante.

7. Cassette selon la revendication 6, caractérisée en ce que la plaque frontale (1) correspondante présente une dépression centrale (18) en forme de cuvette, qui reçoit la plaque (20) en forme de disque et dans laquelle peut s'enfoncer la poignée (15).

8. Cassette selon une des revendications 1 à 7, caractérisée en ce que les tourillons (4, 5) forment une seule pièce avec leurs plaques frontales (1, 2) ou sont formés sur les plaques frontales.

9. Cassette selon une des revendications 1 à 8, caractérisée en ce qu'il est prévu une embouchure (30) de raccordement, qui s'écarte de l'enveloppe (3), et peut être introduite, lors du raccordement de la cassette sur un appareil de copie, dans une ouverture de raccordement prévue sur celui-ci et par laquelle la matière en bande pour photographie, contenue dans la cassette, peut y être saisie et introduite dans l'appareil de copie, et en ce qu'il est prévu dans cette embouchure (30) de raccordement des moyens (32) de codage contenant, sous forme codée, une information susceptible d'être saisie par les moyens de lecture prévus du côté de l'appareil de copie et concernant la largeur de la matière en bande se trouvant dans la cassette.

10. Cassette selon la revendication 9, caractérisée en ce que les moyens de codage sont constitués par un certain nombre d'aimants permanents (32), l'information étant formée par la disposition et l'orientation de ces aimants permanents.

11. Cassette selon la revendication 9 ou 10, caractérisée en ce que l'embouchure (30) de raccordement présente une fermeture (31), étanche à la lumière et qui s'ouvre automatiquement lors de l'introduction dans l'ouverture de raccordement à l'appareil de copie.

*Fig: 1*

*Fig. 3a*

*Fig. 3b*

*Fig. 3c*

EP 0 214 928 B1